# EUROPEAN PATENT APPLICATION

(11) **EP 3 075 563 A1**
(43) Date of publication of application: **05.10.2016**
(21) Application number: 16162842.5
(22) Date of filing: 30.03.2016
(51) Int. Cl.: B43M 11/04

(54) **PASTE SUPPORT**

(30) Priority: 30.03.2015 KR 20150044155
(71) Applicant: An, Hojin, Koyang-city 1701 (KR); Kim, Myung-Soo, Inchon-city (KR)
(72) Inventor: An, Hojin, Koyang-city 1701 (KR); Kim, Myung-Soo, Inchon-city (KR)
(74) Representative: RatnerPrestia

(57) **Abstract**

This invention relates to a paste support. A number of protrusions for pasting (20) are provided at the bottom surface of the base plate (10) with predetermined interval (d) between each of said protrusions, and said protrusions are provided with distal end portion of protrusions for pasting (21), each of said distal ends having rounded tip so that the area contacting with a subject to be pasted (T) and said distal end portion of protrusions for pasting (21) can be minimized, and eventually contamination of subsequent subject to be pasted by residual paste can be avoided during pasting operation of envelopes or other papers.

[Problems to be Solved]

This paste support was invented to solve the problem of the prior art, i.e. contamination of a paper by residual paste at second or subsequent pasting operation. By providing small protrusions for pasting on the base plate of a paste support, amount of residual paste to be applied beyond the end of a paper can be minimized, as well as secondary contamination of subsequent papers to be pasted by residual paste can be avoided, thus enabling easier pasting operation.

[Method for Solving the Problems]

To minimize the amount of residual paste to be left beyond the paper on the paste support, a number of protrusions for pasting protrudes from the base plate, each distal end of said protrusions for pasting having rounded shape with a diameter of 0.2mm to up to 3.0mm and a height of 3mm to top to 10mm, and also having an interval of 1mm to up to 6mm from one protrusion to another. In this way, only very small amount of paste will be left on the surface formed of the distal ends of protrusions, thereby avoiding secondary contamination by residual paste.

## Description

### [Field of the arts]

This invention relates to a paste support, having the structure for minimizing the contacting area between a paper and a support (underlay) to avoid the reverse side of the paper being contaminated or stuck to the support due to residual paste left on the support, when paste is applied to an envelope or a paper, to thereby solving the problem during pasting operation. Further, this paste support has the structure for extending the support by attaching extension support(s) for pasting larger paper easily.

### [Background of the arts]

Generally, paste is used for sticking paper or the like in offices or schools in daily life, or for sticking receipts or photographs in offices and at homes.

For example, in order to stick a receipt onto a paper with said receipt being fully applied with paste to the end of the receipt, the pasting operator in an office will use a separate paper as a support (underlay) so as to avoid the paste to go outside the supporting paper, or will firstly apply paste in the center portion of the receipt paper and then extend the paste toward the end, holding the end of the receipt paper by his/her hand.

On the other hand, it is difficult to apply paste without the paste being going out from the end of a paper to be pasted, or even though the paste is successfully applied, residual paste may be stuck to the support or the operator's finger.

To solve the above mentioned problems, a prior art "Paste Guiding Device" (Korean Patent Registration Number 10-1503483, registered on March 3, 2015) was invented.

Said prior art has paste guides (110) which are connectable to each other and a paste holder (140) for attaching the paste.

Paste can be applied to the end of a paper using the paste held by a paste holder (140), in a manner that the paste guide (110) is moved along the end of a subject to be pasted. The paste holder is connected to the paste guide (110) in a manner that the outer surface of the paste is elastically supported. Said paste guide (110) has a pair of elastic members which is elastically deformable by applying external force, has a shape of brackets with a part opened, and also has a friction portion to enhance the friction between the paste and the paste holder (140).

However, this prior art had a problem. If the paste is applied to a paper end several times, peripheral portion of the paste guide (110) will be contaminated by the paste to thereby contaminating the next paper to be pasted.

Furthermore, this prior art did not provide a means for solving the problem of the residual paste on the support (underlay), as such cleaning papers had been used for cleaning the residual paste to avoid the support to be contaminated, meaning that cleaning papers as well as time had been wasted.

### [Prior arts]

### [Patent document(s)]

[Patent document 1] Korean Patent Registration Number 10-1503483

### [Summary of the invention]

### [Problems to be solved]

This invention was invented to solve the problems of the prior arts. The purpose of this invention is to avoid papers to be subsequently pasted being contaminated by the residual paste, by providing protrusions for pasting, said protrusions for pasting being for minimizing the amount of paste to be applied to the paste support outside the paper to be pasted when paste is applied to the end of the paper, to eventually enabling subsequent large amount of pasting operation being done easily.

### [Means for solving the problems]

To attain the above mentioned purpose, this paste support is comprising of a base plate and a number of protrusions protruding for pasting upwardly from the upper surface of said base plate, each of said protrusions for pasting being positioned with predetermined interval.

The upper portion of said distal end portion of protrusions for pasting have rounded distal ends for pasting, so that the contacting area with the subject to be pasted should be minimum.

Each protrusion for pasting has a diameter of 0.2mm to up to 3.0mm, and the height is 3mm to up to 10mm.

The interval from a protrusion to other protrusions for pasting is 1mm to up to 6mm.

At both lateral sides of a base plate, lower ends for extension extended outwardly from the bottom side of the base plate and upper ends for extension extended outwardly from the top side of the base plate are provided for extending the paste support by stackedly fitting said upper end for extension of a base plate and a lower end for extension of another base plate to each other. The lower end for extension is provided with a number of columns for extension protruding vertically, and the upper end for extension is provided with a number of column fitting holes to be fitted with the columns for extension.

### [Effect of the invention]

The paste support of this invention has the effects as explained below.

The first effect is that the upper distal ends of the columns of the paste support are R-shaped or have hemispherical tip so that the area contacting with a subject to be pasted should be minimized. In this way, pasting operation will not be obstructed by contamination by the sticking residual paste.

The second effect is that a large sized envelope or the like can be easily pasted by extending the area of pasting operation, by stackedly fitting said base plates having the lower end for extension at their lateral sides provided with the columns for extension. In this way, large operation area is ensured during the pasting operation of a number of envelopes or papers.

The third effect is that pasting operation can be done steadily and productively since a planar operation supporting plate is provided at one side of the base plate for supporting the hand or wrist of an operator securing the subject to be pasted.

### [Brief Explanation of Figures]

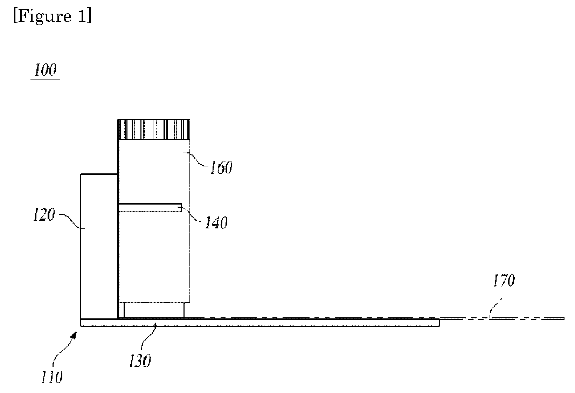

Figure 1 is the perspective view of the paste guiding device of the prior art.
Figure 2 is the perspective view of the paste support of this invention.
Figure 3 shows the plan view and the front view of the paste support of this invention.
Figure 4 is the side view showing the extension of the support (underlay) of the paste support of this invention.
Figure 5 is the perspective view of another embodiment of the paste support of this invention.

### [Preferred embodiment(s) for this invention]

The followings are explanations of the paste support of this invention, referring to the annexed figures.

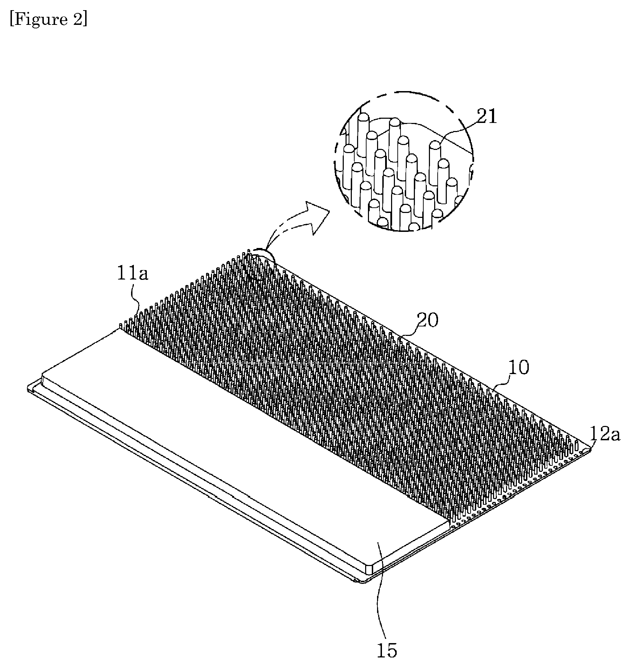

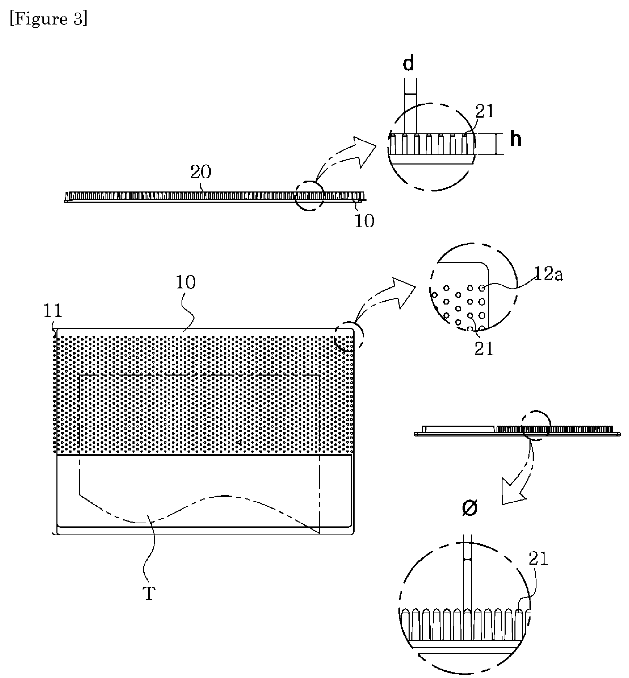

As shown in Figures 2 and 3, the upper portion of a number of distal ends of the protrusions for pasting having predetermined interval (d) one another, which vertically protrude at the top surface of a base plate (10), have the distal end portion of protrusion for pasting (21) having rounded tips so that the contacting area with the subject to be pasted can be minimized.

Basically, each tip of said distal end portion of protrusion for pasting (21) preferably has hemispherical shape, each said protrusion having shape of a stick or rectangular column, so that the subject to be pasted (T) can be contacted at points rather than a plane.

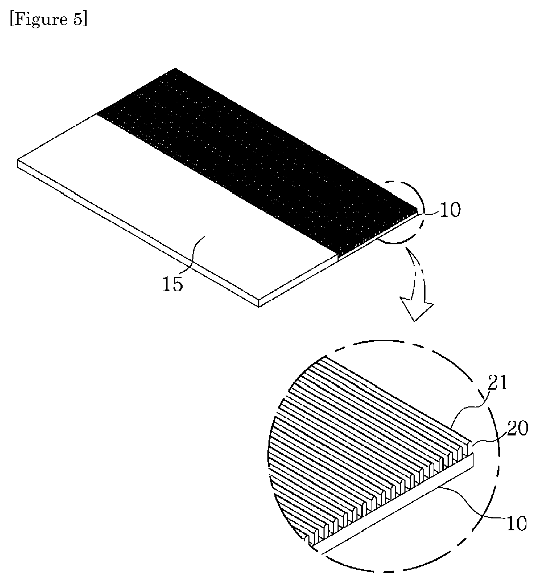

Another embodiment is shown in Figure 5, in which the distal end portion of protrusions for pasting (21) has rectangular protrusions for pasting (20). In this embodiment, residual paste at the ends of said protrusions for pasting (20) will fall down along the side of said protrusions for pasting (20).

Each protrusion for pasting (20) has a diameter of 0.2mm to up to 3.0mm, and a height of 3mm to up to 10mm.

The aggregation of said protrusions for pasting (20) having the diameter (∅) and the height (h) enables large amount of pasting operation, and avoids the subject to be pasted (T) to be contaminated by the residual paste after pasting operation. In this way, the pasting operation can be done easily.

Moreover, said interval (d) among the protrusions for pasting is set to 1mm to up to 6mm, enabling easier pasting operation.

At both lateral sides of the base plate (10), the lower end for extension (11) extended outwardly from the bottom side of the base plate (10) and the upper end for extension (12) extended outwardly from the top side of the base plate (10) are provided for extending the paste support by stackedly fitting the upper end for extension (12) of the base plate (10) and the lower end for extension (11) of another base plate (10) to each other. The lower end for extension (11) is provided with a number of columns for extension (11a) protruding vertically, and the upper end for extension (12) is provided with a number of column fitting holes (12a) to be fitted with the columns for extension (11a). The paste support of this invention can be extended wider by stackedly connecting additional supports, as such, not only normal sized envelopes but larger sized envelopes can also be easily pasted.

A planar operation supporting plate (15) is provided at one side of the base plate (10) for supporting the subject to be pasted (T) during the pasting operation.

Area of the distal end portion of protrusions for pasting (21) are set to be 0.01% to up to 25% of the base plate (10) in terms of area ratio. For example, the distal end portion of protrusions for pasting (21) is set to be 0.0001 cm² to up to 0.25 cm² per 1 cm² of the base plate (10).

Here, the mechanism of this invention is explained.

In the paste support of this invention, as shown in Figures 2 and 3, a number of protrusions for pasting (20) support the subject to be pasted (T), and said protrusions for pasting (20) have the distal end portion of protrusions for pasting (21) with their upper distal ends of the protrusions for pasting for contacting with the subject to be pasted (T) so that the residual paste to be left after pasting operation should be minimized.

The protrusions for pasting (20) is provided with the base plate (10) at their bottom surface, and the protrusions for pasting (20) are positioned with predetermined interval (d) on said base plate (10) so that the subject to be pasted (T) e.g. a paper will not be unsteadily moved in between the protrusions for pasting (20) by pushing force. The interval (d) of 1mm to up to 6mm is the optimum with which paste can be fully applied and at the minimum amount of paste to the subject to be pasted (T).

Moreover, the diameter (∅) of each of the protrusions for pasting (20) is set to 0.2mm to up to 3.0mm and the height (h) is set to 3mm to up to 10mm, to avoid the protrusions for pasting (20) to be excessively deflected when the subject to be pasted (T) is put on the surface of said protrusions for pasting (20), thereby enabling smooth pasting operation.

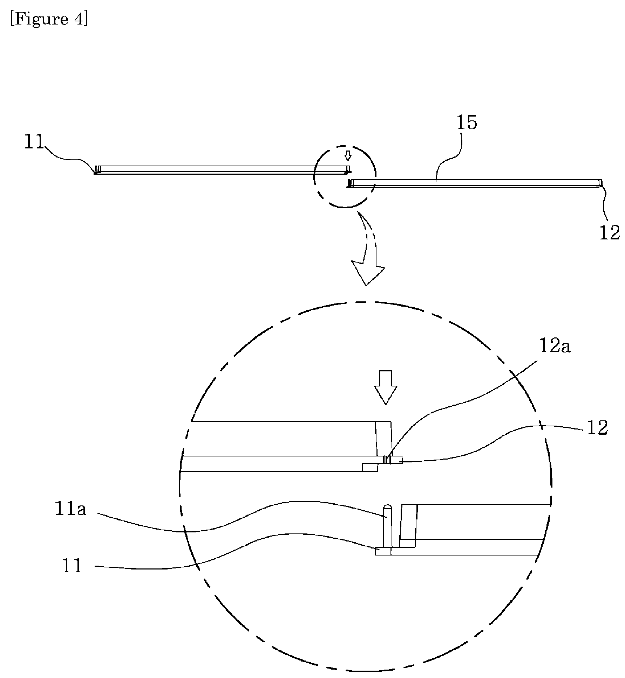

As shown in Figure 4, the base plate (10) has the upper end for extension (11) and the lower end for extension (12) at its both lateral sides so that the paste support can be extended by conjoining two base plates (10). As such, the subject to be pasted (T) having large area such as a large sized envelope or the like can be easily pasted by extending said base plate (10).

The lower end for extension (11) is provided with columns for extension (11a) and the upper end for extension (12) is provided with column fitting holes (12a). The columns for extension (11a) and the column fitting holes (12a) are stackedly fitted to each other to extend the base plate (10).

The planar operation supporting plate (15) is extendedly provided at one side of the base plate (10) for supporting the operator's hand or wrist so that the pasting operation can be done easily.

### [Industrial applicability of this invention]

This invention shall not be limited to the above mentioned specific embodiments, but various alterations is possible within the scope of the claims by any person who has general knowledge in the arts of this invention, and such alterations are included within the scope of the claims.

### [Explanation of the symbols]

100: Paste guiding device
110: Paste guide
120: Vertical guide
130: Supporting plate
140: Paste holder
160: Paste
170: Paper
10: Base plate
11: Lower end for extension
11a: Columns for extension
12: Upper end for extension
12a: Column fitting holes
15: Operation supporting plate
20: Protrusions for pasting
21: Distal end portion of protrusions for pasting
d: Interval
h: Height
T: Subject to be pasted
∅: Diameter

## Claims

1. A paste support comprising of
a number of protrusions for pasting (20), each of said protrusions for pasting (20) protruding uprightly from the upper surface of a base plate (10) and having predetermined interval (d) with other protrusions, and distal end portion of protrusions for pasting (21) provided at the upper end of a number of protrusions for pasting (20), each of said protrusions for pasting (21) having rounded shape so that the contacting area with a subject to be pasted (T) can be minimized during the pasting operation.

2. A paste support according to Claim 1[G1], wherein each of said protrusions for pasting (20) has a diameter (∅) of 0.2mm to up to 3.0mm and also has a height (h) of 3mm to up to 10mm.

3. A paste support according to Claim 1, wherein said interval (d) is set to be 1mm to up to 6mm.

4. A paste support according to Claim 1, wherein said base plate (10) is provided, at its both lateral sides, with a lower end for extension (11) extended outwardly and an upper end for extension (12) extended outwardly so that said base plate (10) can be stackedly extended, said lower end for extension (11) being provided with a number of vertical columns for extension (11a) and said upper end for extension (12) being provided with a number of column fitting holes (12a).

5. A paste support according to Claim 1 or Claim 4, wherein a planar operation supporting plate (15) is provided at one side of said base plate (10) so that the subject to be pasted (T) can be supported during pasting operation.

6. A paste support according to Claim 1, wherein the area of a distal end portion of protrusions for pasting (21) is set to be 0.01% to 25% of the area of said base plate (10) in terms of area ratio.
